# EUROPEAN PATENT APPLICATION

(11) **EP 1 273 419 A2**
(43) Date of publication of application: **08.01.2003**
(21) Application number: 02380142.6
(22) Date of filing: 01.07.2002
(51) Int. Cl.: B29C 44/12

(54) **Procedure for covering metallic pieces with foam plastic**

(30) Priority: 02.07.2001 ES 200101538; 02.07.2001 ES 200101695
(71) Applicant: Llera Castell, Antonio, 50410 Cuarte de Huerva (Zaragoza) (ES)
(72) Inventor: Llera Castell, Antonio, 50410 Cuarte de Huerva (Zaragoza) (ES)
(74) Representative: Davila Baz, Angel

(57) **Abstract**

Procedure of covering metallic pieces for highway barriers and children's playgrounds, which comprises the disposition of the piece to be covered (2) inside a mould between the walls of which and the piece a space is determined in which integral polyurethane (3) is injected with an expansion agent.

## Description

The present invention relates to a procedure for covering metallic pieces for highway barriers and children's playgrounds and more specifically to a procedure to provide metallic pieces intended for the purposes mentioned with a covering that serves as an impact-damping element, as well as to the pieces obtained by said procedure.

The effects of the metallic highway barriers for motorcycle drivers are well known. When a motorcyclist suffers an accident and strikes against one of these barriers, the metallic components thereof behave, due to the force of the impact, as sharp elements that, on occasions, result in injuries more severe than those that the motorcyclist would suffer in the absence of the barrier.

To overcome these problems the device is already known of providing the metallic components that form the barriers of the type explained with a covering based on an independent layer of shock-absorbing material. Said layer is arranged in the form a wrapping over the surface to protect, but without being joined thereto.

With the system described it is necessary to mount the covering, wrapping the metallic piece with the protective cover and make use of a fastening system that prevents the accidental separation of said covering. All of this greatly increases the expense of the system and moreover the protection achieved does not prove very effective, due to the problems of adapting the covering to the metallic piece.

A similar problem occurs in the facilities of children's playgrounds, in which use is made of assemblies constructed on a basis of metallic components, in the greater part, which frequently produce injuries to the children when they fall and strike against the metallic parts.

The metallic components usually consist of metallic bars, generally circular in cross-section, which are connected to each other by means of couplings that usually take the form of crosstie or Tee and which receive the ends of the tubular bars to be connected, which are interlocked to each other by means of radial setscrews. Although in all the facilities and children's playing assemblies it is endeavoured to avoid the presence of sharp edges or elements that can project from the rounded surfaces, said objective is not always totally achieved. Furthermore, as the different components of the facilities, or at least part of them, are metallic in nature, they can produce injuries when the children fall and strike forcefully against said components.

The object of the present invention is a procedure by means of which metallic pieces, especially metallic pieces used in children's playgrounds and highway protective barriers, can be provided with a shock-absorbing protective covering that prevents or reduces the injuries that children or motorcyclists suffer when striking forcefully against said metallic parts or components. An object of the present invention is likewise the piece obtained, provided with a protective covering of deformable and shock-absorbing nature.

In accordance with the invention, to provide the metallic piece with the covering, said piece is placed inside a mould, between the walls of which and the external surface of the piece a space is defined into which is injected integral polyurethane with an expansion agent. Inside the mould, when the polyurethane has expanded and solidified, a deformable external covering is formed on the metallic piece whose external form will be defined by the internal surface of the mould and whose thickness will correspond to the separation between the internal surface of the mould and the external surface of the metallic piece to be covered.

It can be understood that by designing the mould appropriately, a covering of uniform thickness can be achieved over the whole surface of the piece, whatever its configuration. In addition, for the formation of the covering a rigid or flexible polyurethane can be used, depending on what is to be the application of the piece.

When the polyurethane has expanded and solidified and the mould opened, a piece provided with a deformable external covering is obtained, which will act as a shock-absorbing element to prevent or reduce injuries that could occur when a person strikes against said piece.

The pieces to be covered can be of any configuration, being comprised on a basis of wave-shaped sections, like those that form part of highway protective barriers, T-bars or H-bars that constitute the columns to which the wave-shaped sections in the highway barriers are fastened, tubular bars and tubular couplings in crosstie or Tee form, used in the construction of assemblies for children's playgrounds, etc.

In this way a metallic piece is obtained provided with an external covering based on expanded polyurethane, of noticeably uniform thickness which determines a deformable protective layer that acts as a shock-absorbing element to reduce or prevent injuries produced by impact against said pieces.

The metallic pieces can consist of bars of open or closed cross-section which will have on their external surface, a covering of uniform thickness based on expanded polyurethane.

The procedure of the invention allows the covering to be given sufficient thickness to achieve the desired shock-absorbing capacity or protection. Also said covering, in the pieces that so require, can be provided with orifices that coincide with threaded holes in the metallic pieces, in order to receive the heads of the fastening screws, which will be enclosed in the covering, whereby, in the construction formed no metallic element projects or is visible that could originate injuries when a child or adult strikes against the same.

With the purpose that the properties and benefits of the invention can be better understood, a detailed description follows of a piece obtained with the procedure of the invention, with reference to the drawings attached, in which in a non-restrictive manner, an embodiment thereof is shown. In the drawings:
Figure 1 is a side elevation of a tubular element, for the construction of assemblies for children's playgrounds, constituted in accordance with the invention.
Figure 2 is a transversal section of the tubular element, taken on the line ll-ll of figure 1.
Figure 3 is a side view of a connection coupling, in T-form, with tubular arms.
Figure 4 is a top plan of the coupling of figure 3.
Figure 5 is a longitudinal section of the same coupling, taken on the line V-V of figure 3.

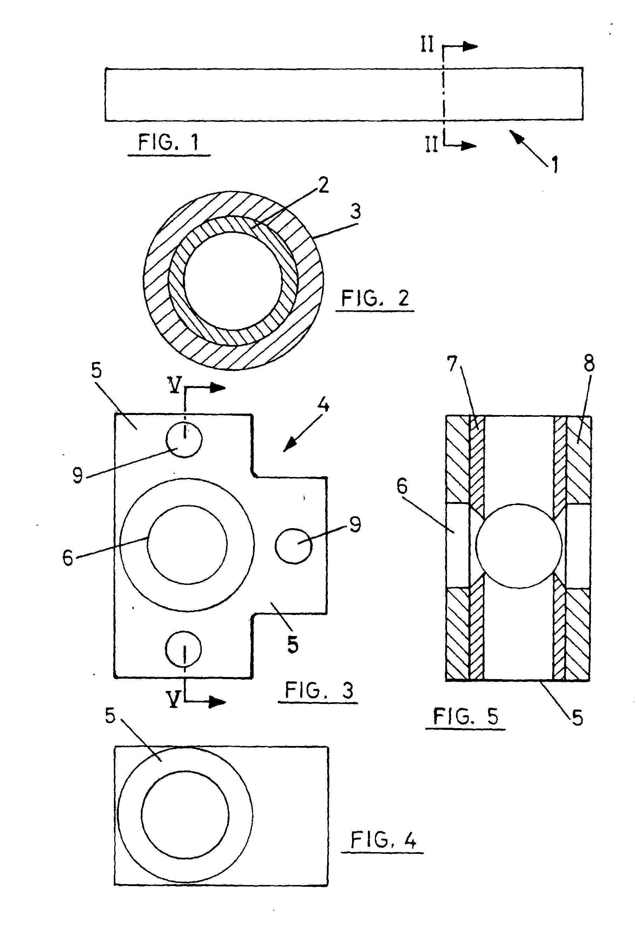

In figure 1 a piece 1 is shown comprising a rod or tubular bar of circular cross-section 2, metallic in nature, which is provided with an external covering 3 of noticeably uniform thickness, over the whole lateral surface. Said rod or bar will become a part of structures for children's playgrounds or facilities.

The covering 3 is incorporated on the basis of expanded polyurethane, preferably elastically deformable in nature, whereby it constitutes a shock-absorbing covering that will serve as a protective element to prevent harm or injury where the children can strike against these components.

In figures 3 to 5 another metallic component is shown that can form part of structures or children's playground assemblies, which consists of a coupling 4 in T-form, the arms 5 of which are of tubular structure, the body also having opposing circular orifices 6. The arms 5 have threaded holes 6 to receive fastening screws.

Both the circular openings 6 and the tubular arms 5 have sufficient internal cross-section to receive the bars or components 1.

The couplings 4 are also formed by a body of metallic nature 7 which has an external covering 8, of noticeably uniform thickness, based on expanded polyurethane, with the same or similar characteristics to those of covering 3 of element 1.

Covering 8 will have orifices 9 facing threaded holes of metallic coupling 7 in order to permit anchoring screws to pass, the head or end of which will be enclosed inside covering 8.

With the explained construction, all the components of the structure or children's playground assembly can be provided with the covering of the invention, whereby metallic parts are not uncovered that could originate injuries to the children, when striking against said parts.

Covering 8 will be preferably obtained by means of injection in a mould, on the metallic piece, of integral polyurethane, with an expansion agent, whereby the covering mentioned is perfectly coupled and adhered to the surface of metallic piece 2 or 7, whatever may be its configuration.

## Claims

1. Procedure of covering metallic pieces for highway barriers and children's playgrounds, **characterised in that** it comprises the disposition of the piece to be covered inside a mould between the walls of which and the piece a space is determined in which integral polyurethane is injected with an expansion agent, which, when expanded and solidified, forms a deformable external covering on the metallic piece that acts as a shock-absorbing element capable of preventing or reducing injuries occurring on impact against said piece.

2. Procedure according to claim 1, **characterised in that** the mentioned covering is of an elastically deformable nature.

3. Metallic piece with protective covering, **characterised in that** it comprises an external covering based on expanded polyurethane, of noticeably uniform thickness, which determines a deformable protective layer which acts as a shock-absorbing element to reduce or prevent injuries occurring on impact against said piece.

4. Piece according to claim 3, **characterised in that** it consists of a metallic bar which has on its external surface a covering of uniform thickness based on expanded polyurethane.

5. Piece, according to claim 3, **characterised in that** it consists of a coupling in the form of a crosstie or Tee of tubular arms, which has an external covering based on expanded polyurethane, which has drilled holes coincident with threaded orifices in the walls of the metallic piece.
